Europäisches Patentamt

European Patent Office

Office européen des brevets

(11) Veröffentlichungsnummer: **0 126 283**
**B1**

(12) **EUROPÄISCHE PATENTSCHRIFT**

(45) Veröffentlichungstag der Patentschrift:
20.12.89

(51) Int. Cl.⁴: **B 27 C 1/10**

(21) Anmeldenummer: **84104186.6**

(22) Anmeldetag: **13.04.84**

(54) **Führungseinrichtung für Handhobelgeräte.**

(30) Priorität: **24.05.83 DE 3318747**
**17.09.83 DE 3333624**

(43) Veröffentlichungstag der Anmeldung:
**28.11.84 Patentblatt 84/48**

(45) Bekanntmachung des Hinweises auf die Patenterteilung:
**20.12.89 Patentblatt 89/51**

(84) Benannte Vertragsstaaten:
**AT BE CH DE FR GB IT LI LU NL SE**

(56) Entgegenhaltungen:
**CH-A- 297 502**
**DE-A- 1 653 701**
**DE-A- 3 130 686**
**DE-A- 3 316 604**
**DE-C- 535 189**
**FR-A- 2 525 948**
**US-A- 1 243 460**
**US-A- 2 771 105**
**US-A- 2 871 897**
**US-A- 3 207 195**

(73) Patentinhaber: **Black & Decker Overseas AG,**
**Staedtle 36, FL-9490 Vaduz (LI)**

(84) Benannte Vertragsstaaten: **BE CH DE FR GB IT LI LU NL**
**SE AT**

(72) Erfinder: **Bergler, Otto, Jahnstrasse 18/1,**
**D-7130 Mühlacker-Lomersheim (DE)**

(74) Vertreter: **Wilhelm, Hans-Herbert, Dr.-Ing. et al, Wilhelm**
**& Dauster Patentanwälte Hospitalstrasse 8,**
**D-7000 Stuttgart 1 (DE)**

## Beschreibung

Die Erfindung betrifft eine Führungseinrichtung für Handhobel- oder Fräsgeräte nach dem Oberbegriff des Patentanspruches 1.

Bekannte Handhobelgeräte werden bisher ausschließlich dazu verwendet, Oberflächen glattzuhobeln bzw. Einpaßarbeiten, z. B. an Fensterrahmen für Maueröffnungen, durchzuführen oder Türen auf Fußbodenhöhe usw. abzuhobeln. Auch Fälze können nachgehobelt werden. Dabei ist der Aufnahmetisch bzw. Spandickenbegrenzer flächenparallel verstellbar zum Führungs- oder Abgabetisch. Der Abgabetisch ist im allgemeinen genau tangential zum Flugkreis der Hobelmesser eingestellt, also nicht veränderlich. Die Flächenstruktur des zu bearbeitenden Werkstücks wird also nicht verändert. Es ist also kein Umformen von Holz in dem Maße bei Handhobeln bekannt, wie sie z. B. beim Profilieren von Leisten, Bilderrahmen, profilierten Verkleidungen aller Art, Profilschaltbrettern usw. erforderlich ist.

Dies geschieht derzeit im wesentlichen an großen stationären Spezialfräsmaschinen usw., welche nur geeignet sind, handelsübliche Profile bzw. Profilbretter zu produzieren. Besondere Profilleisten usw. werden heute umständlich auf herkömmlichen Fräsmaschinen von Hand vorbeigeschoben. Dabei sind oft besondere Führungseinrichtungen erforderlich. Bekannt sind allerdings fest mit Hobelgeräten verbundene Anschläge, mit denen das Hobelgerät an Längskanten der Werkstücke geführt werden kann.

Es ist eine Führungseinrichtung der eingangs genannten Art bekannt (CH-A-619 636). Diese bekannte Führungseinrichtung ist für eine Vorrichtung zum Bohren von Lochreihen mit einer Handoberfräse vorgesehen. Dabei ist eine winkelförmige Anschlagschiene mit nebeneinander angeordneten Zentrierlöchern sowie mit Klemmschrauben vorgesehen, mit denen die Anschlagschiene zusammen mit dem Werkstück am Arbeitstisch befestigt wird. Die Handoberfräse wird an einer Führung gehalten, die es ihr erlaubt, jeweils von Loch zu Loch längsverstellt zu werden. Der Querabstand zu der Führungsschiene wird an einer Halterung eingestellt, die an der Führungsschiene geführt wird. Während des Arbeitsvorganges führt die Handoberfräse lediglich eine Vertikalbewegung aus, um ein Loch zu bohren. Eine Längs- und Querverschiebung wird während des Bohrvorganges durch Zentrierstifte ausgeschlossen, um ein Auslaufen der Bohrungen zu vermeiden.

Für Handkreissägen ist es auch bekannt (DE-C-1 181 894 bzw. US-A-3 830 130), Führungsleisten vorzusehen, an denen die Handkreissägen zum Schneiden von Furnieren od. dgl. längsgeführt werden können. In der DE-C-1 181 894 ist dabei eine Spannleiste vorgesehen, die mit Hilfe von Spannvorrichtungen an den Enden einer Tischplatte angebracht wird. Ein zwischen Spannleiste und Tischplatte eingelegter Stapel von Furnieren kann dann mit der Spannleiste gegen die Tischplatte gedrückt werden. Der Furnierstapel läßt sich mit der Handkreissäge abschneiden, die an der Spannleiste geführt wird.

In der US-A-3 830 130 ist eine Aufnahmeschiene für auswechselbare Führungsleisten vorgesehen. Ein Kreissägeaggregat wird auf die Führungsleisten aufgesetzt, von der ein Teil abgesägt wird, so daß eine Führungskante für die Bearbeitung erzielt wird. Ein Verschwenken des Bearbeitungsgerätes an der Führungsschiene ist dort nicht vorgesehen und auch nicht nötig.

Schließlich ist es aus der DE-A-3 316 604 auch bekannt, zum Planhobeln von Werkstücken eine Einrichtung vorzusehen, mit der das Werkstück über verstellbare Spannbacken gegenüber einem längsverfahrbaren Handhobel- oder Fräsgerät ausgerichtet werden kann. Das Handhobel- oder Fräsgerät selbst wird an einer fest mit der Werkbank verbundenen Führungsschiene mit Hilfe eines Schlittens längsgeführt. Eine Bearbeitung verschiedener Werkstückseiten ist nur nach einem Umspannen desselben möglich.

Der vorliegenden Erfindung liegt daher die Aufgabe zugrunde, eine Führungseinrichtung der eingangs genannten Art so auszubilden, daß Handhobel- oder Fräsgeräte beispielsweise für Handwerker, aber auch für Heimwerker zu einer Bearbeitung von Werkstücken einsetzbar sind, die bisher mit umfangschneidenden Handbearbeitungsgeräten, insbesondere mit Handhobelgeräten nicht möglich war.

Zur Lösung dieser Aufgabe werden bei einer Führungseinrichtung der eingangs genannten Art die kennzeichnenden Merkmale des Patentanspruches 1 vorgesehen. Durch diese Ausgestaltung eignet sich die neue Führungseinrichtung zum Anfertigen von Profilleisten, Lamperien, Heizkörperverkleidungen, Profilschalungen aller Art u. dgl. Bei der neuen Ausgestaltung wird in sehr einfacher, aber stabiler Weise eine Querverstellung des Handhobelgerätes gegenüber der Halteplatte möglich, die ihrerseits mit einer senkrecht zu den beiden Stangen und zu der Führungsschiene ausgerichteten Führung für ein Verbindungsstück zum Führungsglied versehen sein kann. Durch die Verwendung des offenen Führungsprofiles wird trotz der formschlüssigen und daher weitgehend spielfreien Führung die Möglichkeit gegeben, das Bearbeitungsgerät gegenüber dem Werkstück zu schwenken. Auch damit ergeben sich neue Bearbeitungsmöglichkeiten. Das Bearbeitungsgerät kann nun ohne ein Umspannen des Werkstückes an verschiedenen Seiten des Werkstückes angreifen.

Vorteilhafte Weiterbildungen sind in den Unteransprüchen gekennzeichnet.

Vorteilhaft kann auf der der Halteplatte gegenüberliegenden Seite am Handhobelgerät ein relativ zu der Hobelwelle und zum Hobelkopf verstellbarer Gleitschuh zur Auflage auf einer Arbeits- oder Führungsfläche vorgesehen sein, der zweckmäßig in einer senkrecht zur Achse des Hobelkopfes verlaufenden Ebene verschwenkbar und arretierbar am Handhobelgerät gelagert ist. Durch diese Ausgestaltung kann die Möglichkeit der Ausführung einer Schwenkbewegung des Bearbeitungsgerätes auch zu zusätzlichen Bearbeitungsmöglichkeiten ausgenützt werden.

Diese Schwenkmöglichkeit eröffnet auch die Möglichkeit, die Halterung mit einem Rad o. dgl. zu versehen, das an einer parallel zur Führungsschiene verlaufenden Anschlagfläche anlegbar ist. Bei dieser Ausführung übernimmt das Laufteil, welches sich in der Führungsschiene bewegt, gegenüber dieser in der Ebene senkrecht zur Vorschubrichtung immer dieselbe Position ein. Außerdem besteht die einfache Möglichkeit, die Halterung gegenüber dem an dem Laufteil angeordneten Schenkel verschiebbar anzuordnen. Stangen zur Verschiebung des Bearbeitungsgerätes gegenüber der Halterung einschließlich des dazu notwendigen Verstellmechanismus können entfallen.

Da das Laufteil in der Ebene senkrecht zur Vorschubrichtung gegenüber der Führungsschiene immer dieselbe Position einnimmt, ist es bei dieser Ausführung notwendig, zum Verschwenken des Bearbeitungsgerätes gegenüber dem Werkstück bzw. der Werkstückauflage eine andere Konstruktion vorzusehen. Hierauf wird noch eingegangen.

Eine besonders einfache Führung in Vorschubrichtung wird erreicht, wenn die Anschlagfläche, auf der das an der Halterung angebrachte Rad läuft, ein Anschlagschenkel ist, der fest mit der Führungsschiene verbunden oder Teil derselben ist. Hierdurch wird auch bei Befestigung der Führungsschiene an einer nicht weiter bearbeiteten Werkstückauflage eine exakte Bewegung in Vorschubrichtung erreicht, wenn der Anschlagschenkel entsprechend gefertigt oder nachbearbeitet ist. Bevorzugt wird die Führungsschiene einteilig mit dem Anschlagschenkel ausgeführt und beispielsweise aus Kunststoff hergestellt.

Eine weitere vorteilhafte Weiterbildung der Erfindung ergibt sich, wenn die Führungsschiene an einem Werkstückauflagebalken befestigt ist, der auf einer Unterlage auf seiner der Führungsschiene abgewandten Seite um eine parallel zur Oberfläche der Unterlage und in halber Höhe dieses Werkstückauflagebalkens verlaufende Achse schwenkbar ist und wenn an dem Werkstückauflagebalken jeweils oberhalb und unterhalb der Führungsschiene Anschlagflächen vorgesehen sind. Dadurch besteht die Möglichkeit, den Werkstückauflagebalken um die Schwenkachse um 180° zu wenden, so daß er mit jeder seiner zur Oberfläche der Unterlage parallelen Flächen mit dieser in Anlage gebracht werden kann. Umgekehrt kann dadurch auch jede dieser Flächen als Werkstückauflage verwendet werden.

Vor dem Wenden des Werkstückauflagebalkens werden das oder die Laufteile aus der Führungsschiene herausgezogen und nach dem Wenden in umgekehrtem Sinn wieder eingesetzt, so daß nun auch das Bearbeitungswerkzeug bzw. die Halterung eine gegenüber der Ausgangslage um 180° in der Hochachse verschränkte Position einnehmen. Das an der Halterung gelagerte Rad kommt nun mit der zweiten Anschlagfläche in Berührung und läuft auf dieser. Auch in diesem Fall ist es natürlich zweckmäßig, die Führungsschiene und die beiden Anschlagflächen als ein Teil herzustellen.

Diese Ausführung hat den Vorteil, daß zwei verschiedene Auflageflächen für das Werkstück zur Verfügung stehen. Sehr vorteilhaft und auch für andere Anwendungsfälle günstig ist es, diese Auflageflächen für den Gebrauch bei verschiedenen Bearbeitungsvorgängen auszubilden. Eine vorteilhafte Ausgestaltung sieht deshalb vor, daß eine dieser parallel zu der Unterlage verlaufenden Seiten des Werkstückauflagebalkens glatt ausgeführt ist, während die andere Ausnehmungen, insbesondere Nuten, zum Einlegen kleiner oder leistenförmiger Werkstücke aufweist. Die glatte Seite kann somit zum Bearbeiten größerer Werkstücke verwendet werden, während die auf der anderen Seite angeordneten Nuten oder Ausnehmungen zum Einlegen kleinerer Werkstücke dienen, die dadurch einen zusätzlichen Halt bekommen und nicht vom Hobel oder Fräser herausgerissen werden können.

Der wendbare Werkstückauflagebalken kann in sehr einfacher Weise dadurch an der Unterlage gelagert werden, daß auf der Unterlage ein Winkel befestigt ist, an dessen der Unterlage abgewandtem Ende ein auf halber Höhe des Werkstückauflagebalkens an diesem befestigter Schenkel drehbar gelagert ist. Die Befestigung dieses Schenkels an dem Werkstückauflagebalken ist insbesondere dann besonders einfach durchzuführen, wenn der Werkstückauflagebalken auf seiner dem Schenkel zugewandten Seite eine sich über seine halbe Höhe erstreckende Ausnehmung aufweist, die so groß gewählt ist, daß der Schenkel nur mit einer Oberfläche an dem Werkstückauflagebalken anliegt. Es ist dann möglich, den Schenkel beispielsweise mittels einer Verschraubung an dem Werkstückauflagebalken zu fixieren.

Zur Lageverstellung des Bearbeitungsgerätes gegenüber der Halterung ist es zweckmäßig, wenn die Halterung und das Bearbeitungsgerät jeweils ein kreisbogenförmiges Schwenksegment aufweisen, die aneinander geführt und gegeneinander verschwenkbar und feststellbar sind. Für den Feststellvorgang kann dabei das eine Schwenksegment mindestens einen Gewindebolzen o. dgl. aufweisen, der durch eine Nut des anderen Schwenksegments ragt, und gegenüber diesem mittels einer Klemmschraube festgestellt werden kann. Je nach der Größe und Ausbildung der Schwenksegmente kann das Bearbeitungsgerät dabei gegenüber der Oberfläche der Werkstückauflage und damit auch gegenüber dem Werkstück in jede gewünschte Winkelposition gebracht werden.

Zur Verstellung der Lage des Bearbeitungsgerätes in einer zur Oberfläche der Werkstückauflage parallelen Ebene kann zweckmäßig weiter vorgesehen werden, daß die Halterung gegenüber dem Führungsglied entlang einem mit dem Führungsglied verbundenen Element verschoben werden kann.

Weitere Merkmale und Vorteile der Erfindung ergeben sich aus den Unteransprüchen sowie aus der nachfolgenden Beschreibung von Ausführungsbeispielen, die in der Zeichnung dargestellt und in der nachfolgenden Beschreibung erläutert sind. Es zeigen:

Fig. 1 eine teilweise aufgeschnittene Seitenansicht der neuen Führungseinrichtung mit einem daran befestigten Handhobelgerät,

Fig. 2 die Draufsicht auf die Führungseinrichtung der Fig. 1,

Fig. 3 die teilweise aufgeschnittene Stirnansicht der Führungseinrichtung der Fig. 1 und 2 in Normalstellung und in einer geschwenkten Bearbeitungsstellung,

Fig. 4 eine Teilansicht des an der Führungseinrichtung befestigten Handhobelgerätes in Richtung des Pfeiles IV der Fig. 3,

Fig. 5 eine aufgeschnittene perspektivische Darstellung einer Ausführungsform der Führungsschiene der Fig. 1 bis 3, die als Profilteil mit einer Anlage- und Auflagefläche für zu bearbeitende Werkstücke versehen ist,

Fig. 6 eine andere Ausführung der Profilschiene, die ebenfalls als gezogenes Profilteil, vorzugsweise aus Kunststoff ausgebildet ist,

Fig. 7 die einfachste Ausführung der Profilschiene, die hier auf eine Winkelholzleiste aufgebracht ist,

Fig. 8 eine teilweise geschnittene Ansicht einer ersten Ausführungsform der Erfindung,

Fig. 9 die teilweise geschnittene Ansicht einer anderen Ausführungsform in einer anderen Arbeitsposition und

Fig. 10 eine dritte Ausführungsform, wobei die Führungseinrichtung, die Halterung und das Bearbeitungsgerät in zwei verschiedenen Positionen gezeigt sind.

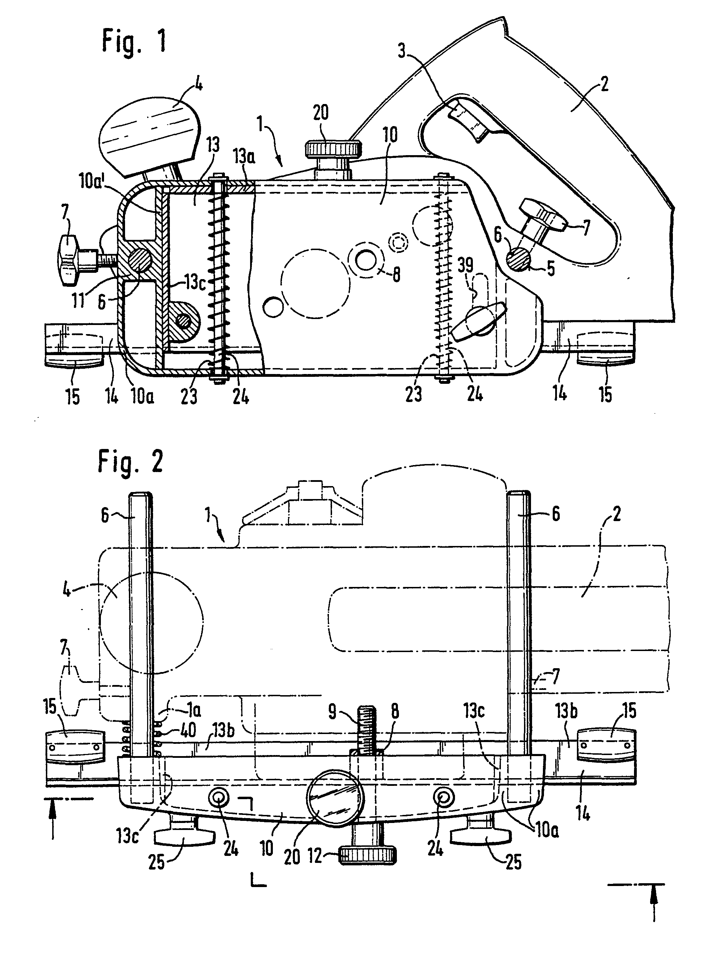

In den Fig. 1 bis 3 ist ein elektrisch betriebenes Handhobelgerät 1 in seinen Umrissen gezeigt, das einen Handgriff 2 mit einem Betätigungsschalter 3 und einen Handknopf 4 aufweist, mit deren Hilfe es in bekannter Weise von Hand zum Abhobeln von Flächen o. dgl. geführt werden kann. Dieses Handhobelgerät 1 ist beim dargestellten Ausführungsbeispiel über Befestigungsbohrungen 5, die das Hobelgerät 1 durchqueren, auf Stangen 6 aufgeschoben und an diesen Stangen über Knebelschrauben 7 festgeklemmt. Das Handhobelgerät 1 ist außerdem noch mit einem Gewindeeinsatz 8 versehen, in welchen eine Stellschraube 9 eingreift, auf die noch eingegangen werden wird.

Sowohl die Stangen 6 als auch die Stellschraube 9 sind an einer Halterung 10 angebracht, die beim Ausführungsbeispiel aus einer profilierten Platte aus Aluminiumguß besteht, die zum einen aus Festigkeitsgründen und zum anderen aus noch zu beschreibenden Gründen mit zum Handhobelgerät 1 weisenden Rändern 10a versehen ist, von denen den beiden Schmalseiten der etwa Rechteckform aufweisenden Platten jeweils ein Doppelrand zugeordnet ist, zwischen dem die Aufnahmestege 11 für die Stangen 6 angeordnet sind. An der Halterung 10 ist drehbar die Stellschraube 9 gelagert, die mit einem nach außen abstehenden Kopf 12, vorzugsweise mit einer Rändelung versehen ist, damit sie von Hand betätigt werden kann. Die linke Stange 6, vorzugsweise aber beide Stangen 6 sind zwischen der Halterung 10 und einem Ansatz 1a des Handhobelgerätes 1 mit einer Druckfeder 40 versehen, welche nach dem Lösen der Knebel- und Klemmschraube dafür sorgt, daß das Handhobelaggregat 1 so weit von der Halterung 10 abgedrückt wird, wie dies die Stellschraube 9 zuläßt. Durch Betätigen dieser Stellschraube 9 kann daher der Abstand zwischen dem Handhobelaggregat 1 und der Halterung 10 feinfühlig einreguliert werden. Ist dies geschehen, so werden die Klemmschrauben 7 festgezogen, so daß die Relativlage zwischen Handhobelgerät 1 und Halterung 10 fixiert ist.

In der Halterung 10 ist ein Z-förmig abgewinkelter Blechteil 13 vorgesehen, dessen oberer Schenkel 13a etwa parallel zum oberen Rand 10a der Platte 10 verläuft und dessen unterer Schenkel 13b, der parallel zu dem Schenkel 13a verläuft, nach beiden Seiten über die seitliche Begrenzung der Platte 10 hinaus zu einem Führungssteg 14 verlängert ist, der als Winkelprofil ausgebildet ist und an dem waagrechten Schenkelteil 13b zu beiden Seiten der Platte 10 mit einem Laufteil in der Form von in leichter Tonnenform gestalteten Führungszylindern 15 versehen ist, die durch Stifte mit dem Steg 13b dadurch verbunden ist, daß dieser Steg 13b in einen Radialschlitz 15a der Zylinder 15 hereinreicht und dort verstiftet ist.

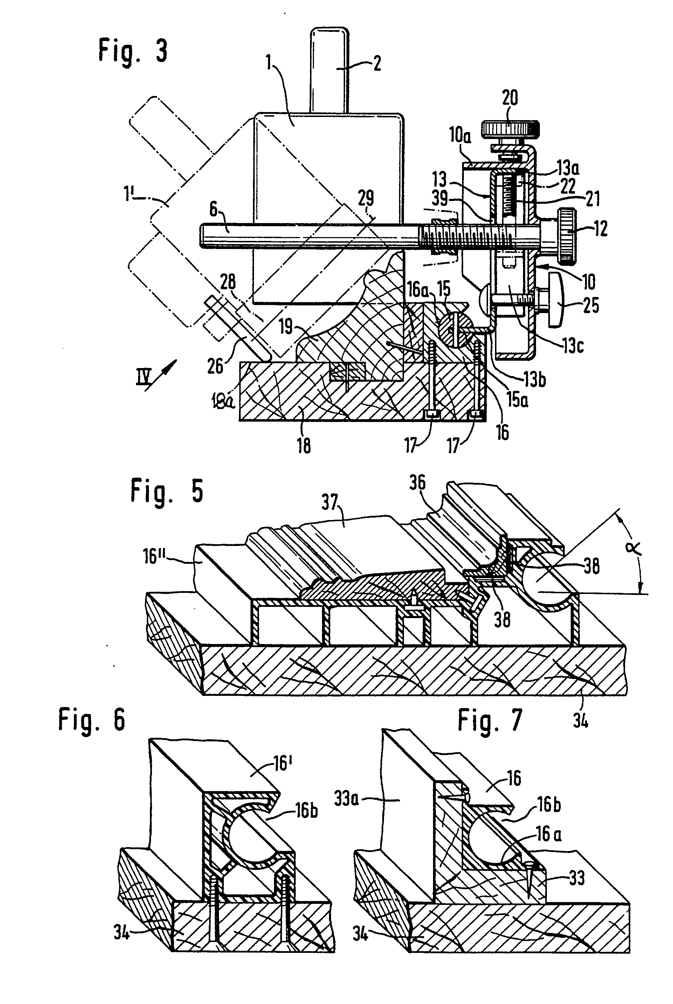

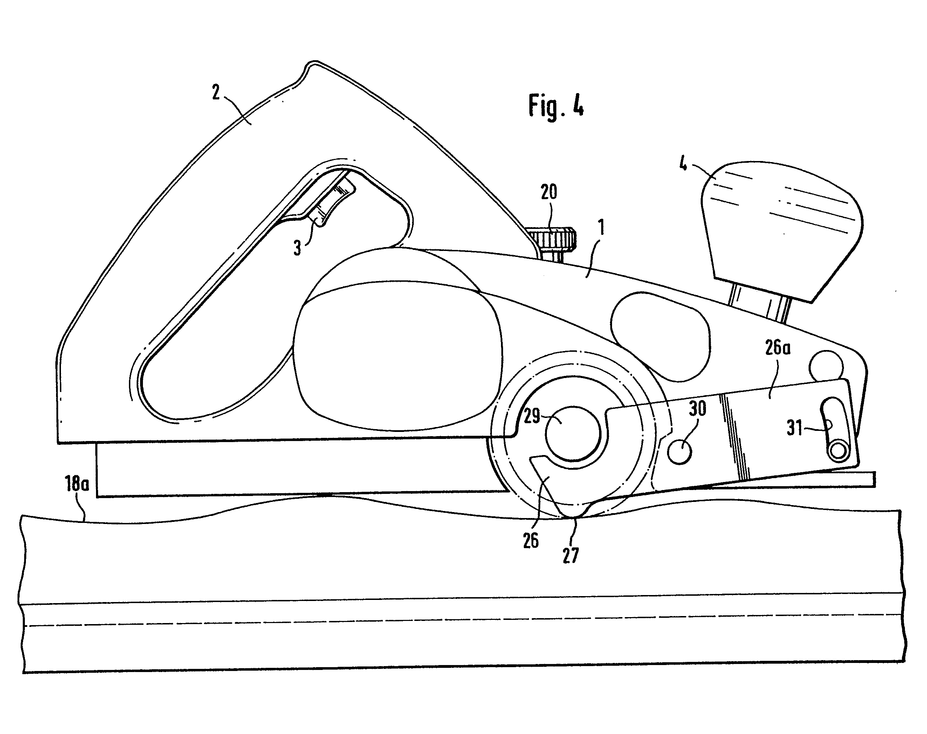

Diese Führungszylinder 15 werden, wie aus Fig. 3 ersichtlich ist, in der runden Nut 16a einer Führungsschiene 16 aufgenommen, die beim Ausführungsbeispiel über zwei Reihen von Befestigungsschrauben 17 auf einem Brett 18 o. dgl. aufgeschraubt ist. Andere Ausgestaltungsmöglichkeiten dieser Führungsschiene 16 sind in den Fig. 5 bis 7 erläutert.

Die mit dem Brett 18 verbundene Führungsschiene 16 dient auf diese Weise als Anlage und zum Ausrichten einer zu bearbeitenden Leiste 19 (Fig. 3). Auf die Möglichkeit der Bearbeitung und Profilierung dieser Leiste 19 wird später noch eingegangen.

Das als Z-förmiges Blech ausgebildete Verbindungsteil 13 von dem Führungszylinder 15 zur Halterung 10 ist ebenfalls verstellbar in der Halterung 10 angeordnet. Zu diesem Zweck ist das Verbindungsteil 13 zum einen senkrecht zu den Stangen 6 und senkrecht zu der Führungsschiene 16 verschiebbar in der Halterung 10 gelagert. Es liegt zu diesem Zweck mit zwei seitlich abgeklappten Lappen 13c an den Führungsrändern 10a' der Halterung 10 an. In der als Platte ausgebildeten Halterung 10 ist in dem oberen Rand eine Verstellschraube 20 drehbar gelagert, die mit ihrem Gewinde 21 in eine fest mit dem oberen freien Schenkel 13a des Verbindungsteiles 13 verbundene Mutter 22 eingreift. Durch Verdrehen der Stellschraube 20 kann daher das Verbindungsteil 13 an den Führungen 10a' in Richtung zur Führungsschiene 16 gegenüber der Halterung 10 verschoben werden. Die Rückstellung des Verbindungsteiles 13 übernehmen Druckfedern 23, die an zwei parallel zu den Führungsrändern 10a' in der Halterung 10 angeordneten Haltebolzen 24 gehalten sind und sich mit ihrem unteren Ende auf den unteren Rand 10a der Halterung 10, mit ihrem oberen Ende dagegen an dem Steg 13a des Verbindungsteiles 13 abstützen. Die jeweils durch Betätigen der Stellschraube 20 eingestellte Relativlage zwischen dem Verbindungsteil 13 und der Halteplatte 10 wird durch zwei Klemmschrauben 25 arretiert, die jeweils durch Längsschlitze 39 in dem Verbindungsteil 13 hindurchgreifen.

Auf der der Halteplatte 10 abgewandten Seite des Handhobelgerätes 1 (Fig. 4) ist ein Gleitschuh 26 vorgesehen, dessen Auflagepunkt 27 im Bereich der Eingriffsfläche des um die Drehachse 29 rotierenden Hobelkopfes 28 mit dem Werkstück 19 liegt. Dieser Gleitschuh 26 ist um die Achse 30 am Handhobelgerät 1 schwenkbar gelagert. Die jeweilige Schwenklage läßt sich durch eine nicht näher gezeigte Klemmschraube fixieren, die durch einen kreisbogenförmigen Schlitz 31 in einem Hebelteil 26a des Gleitschuhes 26 eingreift, der auf der entgegengesetzten Seite des Gleitschuhes 26 bezogen auf die Schwenkachse 30 liegt. Wie aus Fig. 3 erkennbar wird, läßt sich durch diese Maßnahme die Angriffsstellung des Hobelkopfes 28 am Werkstück 19 einstellen.

Die Arbeitsweise des Hobelgerätes 1 mit der neuen Führungseinrichtung ist folgende:

Nach dem Befestigen des Hobelgerätes 1 an der Halterung 20 mit Hilfe der Stangen 6 wird die Halterung 10 zusammen mit dem Hobelgerät um die Achse der Nut 16a und um die Achse der Führungszylinder 15 in die in der Fig. 3 gestrichelt dargestellte Lage geschwenkt. Die Führungsschiene 16 weist zu diesem Zweck, wie insbesondere aus den Fig. 5 bis 7 hervorgeht, einen Längsschlitz auf, durch den der Schenkel 13b des Verbindungsteiles 13 hereingreifen kann. Die Breite des Längsschlitzes 16b ist dabei so gewählt, daß der gewünschte Schwenkwinkel, beim Ausführungsbeispiel α = 45° erreicht werden kann. Natürlich wäre auch die Realisierung eines größeren Schwenkwinkels möglich.

In dieser geschwenkten Lage wird dann die Relativlage des nun geschwenkten Hobelgerätes 1' zu der Halterung 10 durch Betätigen der Verstellschrauben 20 und 12 eingestellt. Auch der Gleitschuh 26 wird eingestellt und anschließend werden sämtliche Einstellungen fixiert. Es wird dann möglich, die Oberfläche des Werkstückes 19 der Fig. 3 beispielsweise mit einem Profilhobel längs der angedeuteten Außenkontur 18a zu bearbeiten. Zu diesem Zweck wird das Hobelgerät mit den Führungszylindern 15 in der Führungsschiene 16 längs des beispielsweise leistenförmigen Werkstückes 19 geführt.

Die Führungsschienenprofile der Fig. 5 bis 7 zeigen die einfachste Profilart in der Fig. 7, wo ein beispielsweise aus Kunststoff längsgezogenes Profil auf eine Winkelleiste 33 aufgenagelt ist, die ihrerseits auf einer Tischplatte 34 angebracht ist. Die Rückseite 33a der Winkelleiste kann als Anlage für das zu bearbeitende Werkstück dienen, das an dieser Rückseite beispielsweise in bekannter Weise angenagelt, aber auch durch ein sogenanntes Klettenband festgelegt werden kann, dessen Bestandteile dem Rücken 33a und der Anlagefläche des Werkstückes zugeordnet werden. Diese Ausgestaltung weist den Vorteil auf, daß beispielsweise auch Heimwerker sich jederzeit die Führungseinrichtung aufbauen und dann Leisten bearbeiten können, was bisher nicht möglich war. Die Führungsschiene 16 kann wie bereits erwähnt, aus Kunststoff hergestellt sein, sie läßt sich aufgrund ihrer Biegsamkeit aufwickeln und so oft zusammen mit den anderen Teilen der neuen Führungseinrichtung und mit dem Hobelgerät transportieren.

Das gilt auch für die in den Fig. 5 und 6 gezeigten Profile der Führungsschiene 16, wenn diese ebenfalls aus Kunststoff hergestellt sind. Fig. 6 zeigt ein gezogenes Profil, das auf die Tischfläche 34 geschraubt werden kann. Die so ausgebildete Führungsschiene 16' benötigt keine zusätzliche Winkelleiste.

Die in der Fig. 5 gezeigte Profilschiene 16" benötigt ebenfalls keine zusätzlichen Winkelleisten. Sie wird auf einer Tischfläche befestigt und dient dann unmittelbar als Auflage für eine Winkelleiste 36 oder für ein flaches Profil 37, das zu diesem Zweck aufgenagelt wird. Die Köpfe der Nägel sind in entsprechenden Längsnuten der Führungsschiene 16" gehalten. Die profilierte Leiste 36 wird, wie angedeutet, mit Klebe- oder Klettstreifen 38 an der Schiene 16" gehalten. Auch diese Schiene läßt sich aufwickeln und daher leicht transportieren. Da die übrigen Teile der neuen Führungseinrichtung entsprechend leicht gestaltet werden können, ist ein transportables Gerät geschaffen, das bei Verwendung von Hobelköpfen mit Profilmessern für einen Bearbeitungsvorgang eingesetzt werden kann, der bisher in dieser Art noch nicht durchgeführt werden konnte.

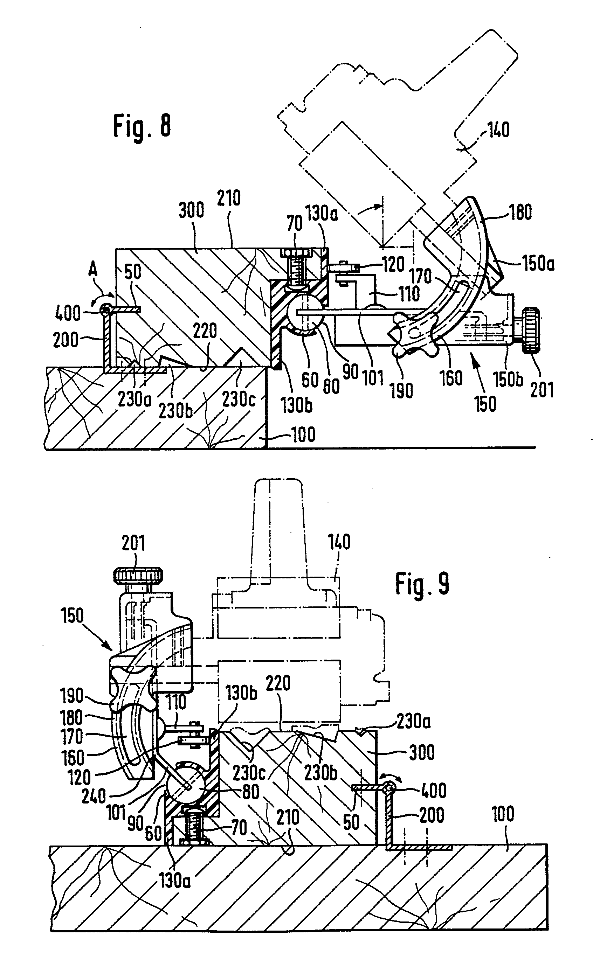

Auf einer in der Fig. 8 mit 100 bezeichneten Unterlage ist ein als Winkelleiste ausgebildeter Schenkel 200 befestigt, beispielsweise aufgeschraubt. Der von der Unterlage abstehende Teil dieses Schenkels reicht bis zur halben Höhe eines Werkstückauflagebalkens 300 und trägt an seinem äußeren Ende ein Lager 400, an welchem ein mit dem Werkstückauflagebalken 300 verbundenes Teil 50 gelagert ist. Der Werkstückauflagebalken 300 läßt sich um dieses Lager in Richtung des Pfeiles A somit um 180° verschwenken, wodurch im folgenden noch auszuführende Vorteile erzielt werden.

An der dem Lager 400 abgewandten Seite trägt der Werkstückauflagebalken 300 eine Führungsschiene 60, die wie bei den Beispielen der Fig. 5 bis 7 aus Kunststoff oder Metall bestehen kann. Im Ausführungsbeispiel der Fig. 8 ist sie mit dem Werkstückauflagebalken 300 über Schrauben 70 verbunden. Die Führungsschiene weist eine kreisförmige Ausnehmung auf, in der eine oder mehrere Führungszylinder 80 längs verschiebbar geführt sind. Die Vorschubbewegung verläuft in der Darstellung der Fig. 8 aus der Zeichenebene heraus oder in diese hinein. Im Ausführungsbeispiel weist die kreisförmige Führung der Führungsschiene 60 außerdem eine sich über 90° erstreckende Öffnung 90 auf.

In den Führungszylinder 80 ist eine Platte 101 eingelassen, die über einen Winkel 110 ein Rad 120 trägt. Dieses Rad 120 rollt während der Vorschubbewegung an einem Anschlagschenkel 130a ab, der Teil der Führungsschiene 60 ist. Der Führungszylinder 80 nimmt gegenüber der Führungsschiene in der Ebene senkrecht zur Vorschubrichtung immer dieselbe Position ein. Die Führungsschiene 60 weist außerdem noch einen zweiten Anschlagschenkel 130b auf, an dem das Rad 120 dann abläuft, wenn der Werkstückauflagebalken 300 geschwenkt und das Bearbeitungsgerät im umgekehrten Sinn eingesetzt wurde, wie im folgenden noch erläutert werden wird. Das Bearbeitungsgerät 140, das beispielsweise ein Handhobel- oder ein Fräsgerät sein kann, ist gegenüber der im ganzen mit 150 bezeichneten Halterung verschwenkbar. Hierzu sind sowohl einer dem Bearbeitungsgerät 140 zugeordneten Teilhalterung 150a als auch an der an der Platte 101 befestigten Teilhalterung 150b kreisbogenförmige Schwenksegmente angebracht. Das mit der Teilhalterung 150a verbundene Schwenksegment 160 weist hierzu einen kreisbogenförmig verlaufenden Schlitz 170 auf, durch den ein Gewindebolzen od. dgl. ragt, mit dem ein der Teilhalterung 150b zugeordnetes Schwenksegment 180, das nur gestrichelt angedeutet ist, festgelegt werden kann. Mittels einer Klemmschraube 190 kann die Position der beiden Schwenksegmente zueinander fixiert werden. Die Position des Bearbeitungsgeräts gegenüber der Führungsschiene kann außerdem mittels einer mit einer Riffelung versehenen Stellschraube 201 eingestellt werden, und zwar nach rechts bzw. links gemäß Fig. 8. Hierzu ist die Schraube 201 beispielsweise in bekannter und hier nicht näher dargestellter Weise mit einer Gewindespindel und an dem mit dem Schwenksegment 180 verbundenen Teil 150b der Halterung gelagert. Sie greift in ein Verstellgewinde des mit der Führungsschiene 60 verbundenen Halterungsteils ein, der auch die Platte 101 trägt. Das Bearbeitungsgerät 140 kann somit gegenüber einem hier nicht gezeigten Werkstück in jede beliebige Position gebracht werden. Das Werkstück wird dabei auf den Werkstückauflagebalken 300 aufgelegt oder auf diesem eingespannt. Durch die Anlage des Rades 120 an dem Anschlagschenkel 130a ergibt sich eine exakte Führung und ein sehr ruhiger Lauf in Vorschubrichtung.

Ein weiterer Vorteil der Erfindung wird durch die Wendbarkeit des Werkstückauflagebalkens erzielt. Hierzu wird der Führungszylinder 80 aus der Führungsschiene 60 herausgezogen und dann der Werkstückauflagebalken 300 in Richtung des Pfeiles A (Fig. 8) um sein Lager 400 gewendet. Anschließend werden die Führungszylinder 80 wieder in umgekehrtem Sinn in die Führungsschiene 60 eingeführt. Das Rad 120 kommt hierbei zur Anlage an dem Anschlagschenkel 130b. Hierdurch wird es möglich, beide Oberflächen des Werkstückauflagebalkens 300 für die Bearbeitung von Werkstücken zu nutzen. Im gezeigten Ausführungsbeispiel ist die Oberfläche 210 glatt ausgeführt und damit für die Bearbeitung größerer Werkstücke geeignet, während die Oberfläche 220 Nuten 230a bis 230c aufweist, in die kleinere Werkstücke, beispielsweise schmale Leisten, eingelegt werden können. Die Bearbeitung solcher Werkstücke gestaltet sich wesentlich einfacher, da sie in der Nut besser geführt sind und vom Hobel oder Fräser nicht herausgerissen werden können.

In der Darstellung der Fig. 9 ist die gesamte Vorrichtung in einer anderen Ausführungsform und mit gewendetem Werkstückauflagebalken 300 gezeigt. Sie unterscheidet sich von der Ausführungsform der Fig. 8 insofern, als das platten- oder leistenförmige Element 101 hier mit einer Abwinkelung 240 versehen ist.

Auch die Lagerung 110 für das Rad 120 ist etwas anders gestaltet. In die Nuten 230a bis 230c sind Leisten eingelegt, die nur angedeutet sind, in diesen Nuten gehalten werden und daher einfacher bearbeitet werden können. Außerdem wird aus der Fig. 9 der Sinn der Öffnung 90 der Führungsschiene 60 deutlich. Das Element 101 gelangt in der dort gezeigten Stellung an den gegenüber Fig. 8 anderen Anschlag dieser Öffnung.

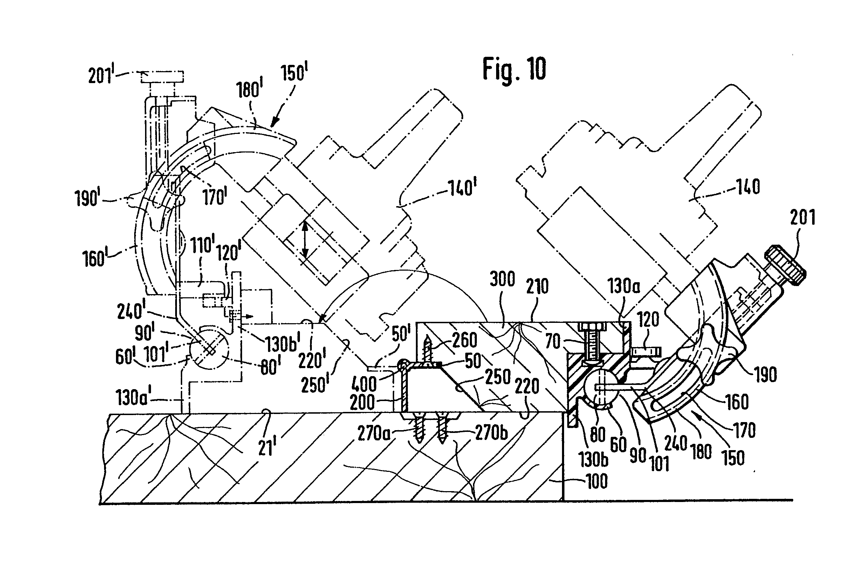

In der Fig. 10 ist eine weitere Ausführungsvariante der Erfindung dargestellt. Die Ausbildung der Führungsschiene der Halterung und des Bearbeitungsgerätes entspricht dabei im wesentlichen dem Ausführungsbeispiel der Fig. 9. Der Werkstückauflagebalken 300 ist hier allerdings insofern anders ausgeführt, als er eine Abfasung 250 aufweist. Diese Abfasung hat den Vorteil, daß das Teil 50 über eine Schraube 260 direkt mit dem Werkstückauflagebalken 300 verschraubt werden kann. Außerdem zeigt die Fig. 10 auch die Verschraubung des Winkels 200 mit der Unterlage 100 über Schrauben 270a und 270b. Die an der Oberfläche 220 des Werkstückauflagebalkens 300 angeordneten Nuten sind hier nicht gezeigt, können aber ebenfalls vorgesehen werden.

Die Fig. 10 zeigt im übrigen die Verwendung des Werkstückauflagebalkens bzw. der Führungseinrichtung in zwei Stellungen. In der rechten, ausgezogen gezeichneten Position sind hierbei dieselben Bezugszeichen verwendet wie in den Fig. 8 und 9. Bei der gestrichelt angedeuteten linken Bearbeitungsposition sind die Bezugszeichen mit einem Strich versehen. In dieser linken Position ist außerdem die verschwenkte Lage 140' des Bearbeitungsgerätes 140 gezeigt, wobei beide Schwenksegmente sichtbar sind.

**Patentansprüche**

1. Führungseinrichtung für Handhobel- oder Fräsgeräte (1) mit einer motorgetriebenen, umfangsschneidenden Werkzeugwelle oder einem Hobelkopf, insbesondere zum Bearbeiten länglicher Werkstücke wie Leisten oder dergleichen, die mit einer fest mit dem Bearbeitungsgerät (1) verbindbaren Halterung (5, 6) und einem über Stangen an dieser befestigten Führungssteg versehen ist, der an einer dem Werkstück zugeordneten Führungsschiene (16) geführt ist, wobei der Abstand des Bearbeitungsgerätes gegenüber dem Führungssteg verstellbar ist, dadurch gekennzeichnet, daß der Führungssteg als eine mit den Stangen versehene Halteplatte (10) ausgebildet ist, die mit einer Führung (10a, 10a') für ein Verbindungsstück (13) zu einem Laufteil (14) versehen ist, daß an dem Laufteil (14) zwei beabstandete im wesentlichen zylindrische Profilstücke ausgebildet sind, die formschlüssig in der Führungsschiene (16) geführt sind, die als ein nach einer Seite offenes Führungsprofil ausgebildet ist, dessen Führungsnut (16a) dem Querschnitt der Profilstücke angepaßt ist und daß die Öffnung des Führungsprofiles der Führungsschiene (16) als ein in seiner Breite dem Verschwenkwinkel für das Bearbeitungsgerät entsprechender Längsschlitz (16b) ausgebildet ist.

2. Führungseinrichtung nach Anspruch 1, dadurch gekennzeichnet, daß die Stangen (6) in Bohrungen (5) im Bearbeitungsgerät (1) eingeführt und festgeklemmt sind und daß mindestens einer Stange (6) eine Rückstellfeder (13) und der Halteplatte (10) eine Verstellschraube (9) zugeordnet sind, die in ein Verstellgewinde (8) des Bearbeitungsgerätes (1) eingreift.

3. Führungseinrichtung nach Anspruch 1 oder 2, dadurch gekennzeichnet, daß das Verbindungsstück (13) als ein Z-förmig gewinkeltes Blech ausgebildet ist, dessen Seitenkanten (13c) Führungskanten bilden und dessen einer freier Schenkel (13a) mit einem Verstellgewinde (22) für eine an der Halteplatte (10) angeordnete, vorzugsweise gegen eine Rückstellfeder (23) wirkende Verstellschraube (21) und dessen anderer freier Schenkel (13b) mit dem Führungsglied (15) versehen ist.

4. Führungseinrichtung nach Anspruch 3, dadurch gekennzeichnet, daß zwei jeweils im Bereich der Enden des einen freien Schenkels (13b) des Verbindungsstückes (13) angeordnete Führungszylinder (15) vorgesehen sind, die zu ihren Stirnenden hin tonnenförmig abgerundet sind.

5. Führungseinrichtung nach Anspruch 1, dadurch gekennzeichnet, daß dem Bearbeitungsgerät (1) auf der der Halteplatte (10) gegenüberliegenden Seite ein relativ zu der Hobelwelle (29) oder zum Hobelkopf verstellbarer Gleitschuh (26) zur Auflage auf einer Arbeits- oder Führungsfläche (18) zugeordnet ist.

6. Führungseinrichtung nach Anspruch 5, dadurch gekennzeichnet, daß der Gleitschuh (26) in einer senkrecht zur Achse (29) der Werkzeugwelle oder des Hobelkopfes verlaufenden Ebene verschwenkbar und arretierbar am Handhobelgerät (1) gelagert ist und daß die Auflagefläche (27) des Gleitschuhes (26) im Eingriffsbereich der Werkzeugwelle (29) oder des Hobelkopfes vorgesehen ist.

7. Führungseinrichtung nach Anspruch 1, dadurch gekennzeichnet, daß die Führungsschiene (16, 16'') als eine Anlageleiste für das Werkstück (36, 37) ausgebildet und/oder mit einer Auflagefläche für das Werkstück (37) und für den Gleitschuh (26) ausgerüstet ist.

8. Führungseinrichtung nach Anspruch 7, dadurch gekennzeichnet, daß die Führungsschiene (16, 16', 16'') aus einem biegsamen Material, insbesondere aus Kunststoff, hergestellt ist.

9. Führungseinrichtung nach Anspruch 8, dadurch gekennzeichnet, daß die Führungsschiene (16, 16', 16'') aus eloxiertem Aluminium im Strangpreßverfahren hergestellt und mit Spannuten für die Werkstückauflage (37) und mit Nuten zum Einsetzen von Nägeln oder einem Nagelbrett bzw. einer Klebebefestigung versehen ist.

10. Führungseinrichtung nach Anspruch 1, dadurch gekennzeichnet, daß das Laufteil (80) mit mindestens einem Rad (120) versehen ist, das an einer parallel zur Führungsschiene (60) verlaufenden Anschlagsfläche (130a, 130b) zur verschwenkungsfreien Führung anlegbar ist.

11. Führungseinrichtung nach Anspruch 1 oder 14, dadurch gekennzeichnet, daß die Führungsschiene (60) an einem Werkstückauflagebalken (300) befestigt ist, der auf einer Unterlage (100) auf seiner der Führungsschiene (60) abgewandten Seite um eine parallel zur Oberfläche der Unterlage (100) und in halber Höhe dieses Werkstückauflagebalkens (300) verlaufende Achse (400) schwenkbar ist und daß an dem Werkstückauflagebalken (300) jeweils oberhalb und unterhalb der Führungsschiene (60) Anschlagflächen (130a, 130b) vorgesehen sind.

12. Führungseinrichtung nach Anspruch 15, dadurch gekennzeichnet, daß auf der Unterlage (100) ein Winkel (200) befestigt ist, an dessen der Unterlage (100) abgewandten Ende ein auf halber Höhe des Werkstückauflagebalkens (300) an diesem befestigter Schenkel (50) schwenkbar gelagert ist und daß der Werkstückauflagebalken (300) auf seiner dem Schenkel (50) zugewandten Seite eine sich über seine halbe Höhe erstreckende Abfasung (250) aufweist, die so groß gewählt ist, daß der Schenkel (50) nur mit einer Oberfläche an dem Werkstückauflagebalken (300) anliegt.

13. Führungseinrichtung nach Anspruch 1, dadurch gekennzeichnet, daß die Führungsschiene (60) an einem Werkstückauflagebalken (300) befestigt ist und daß Nuten (230a bis 230c) zum Einlegen eines leistenförmigen Werkstücks auf einer Seite des Werkstückauflagebalkens vorgesehen sind.

14. Führungseinrichtung nach Anspruch 15, dadurch gekennzeichnet, daß eine der parallel zu der Unterlage (100) verlaufenden Seiten (210, 220) des Werkstückauflagebalkens (300) glatt ausgeführt ist, während die andere die Nuten (230a–230c) aufweist.

15. Führungseinrichtung nach einem der Ansprüche 14–18, dadurch gekennzeichnet, daß das Laufteil (80) und das Bearbeitungsgerät (140) über eine Kulissenführung mit je einem kreisbogenförmigen Schwenksegment (160, 180) aneinander geführt, gegeneinander schwenkbar und feststellbar sind.

**Claims**

1. A guide device for hand planes or milling cutters (1) with a motor-driven, circumferentially cutting tool arbor or a plane head, particularly for machining elongated workpieces such as battens or the like, and which is provided with a support (5, 6) adapted for rigid connection to the machining unit (1) and, fixed to the support by rods, a guide web, guided on a guide rail (16) associated with the workpiece, the distance between the machining unit and the guide web being adjustable, characterised in that the guide web is constructed as a supporting plate (10) provided with the rods and with a guide (10, 10a) for a member (13) for connection to a moving part (14) and in that there are on the moving part (14) two spaced-apart substantially cylindrical profile members, which are positively guided in the guide rail (16), which is constructed as a guide profile open on one side, the guide groove (16a) thereof being adapted to the cross-section of the profile members and in that the opening in the guide profile of the guide rail (16) is constructed as a longitudinal slot (16b) which in its width corresponds to the pivoting angle of the machining unit.

2. A guide device according to Claim 1, characterised in that the rods (6) are introduced into and are rigidly clamped in bores (5) in the machining unit (1) and in that a restoring spring (13) is associated with at least one rod (6) and an adjusting screw (9) is associated with the supporting plate (10), the adjusting screw (9) engaging an adjusting screw thread (8) in the machining unit (1).

3. A guide device according to Claim 1 or 2, characterised in that the connecting piece (13) is constructed as a metal plate angled to a Z shape, its side edges (13c) forming guide edges while one of its free arms (13a) is provided with an adjusting screw thread (22) for an adjusting screw (21) disposed on the supporting plate (10) and preferably acting against a restoring spring (23), while the other free arm (13b) is provided with the guide member (15).

4. A guide device according to Claim 3, characterised in that two guide cylinders (15) are provided which are in each case disposed in the region of the ends of one free arm (13b) of the connecting member (13), being rounded off in a barrel shape towards their end faces.

5. A guide device according to Claim 1, characterised in that associated with the machining unit (1), on the side opposite the supporting plate (10) there is a sliding shoe (26) adjustable in relation to the plane spindle (29) or plane head and intended to rest on a working or guide surface (18).

6. A guide device according to Claim 5, characterised in that the sliding shoe (26) is mounted on the hand planing unit (1) in such a way that it is pivotable and lockable in a plane extending at right-angles to the axis (29) of the tool spindle or plane head and in that the bearing surface (27) of the sliding shoe (26) is provided in the range of engagement of the tool spindle (29) or plane head.

7. A guide device according to Claim 1, characterised in that the guide rail (16, 16″) is constructed as a bearing strip for the workpiece (36, 37) and/or is equipped with a bearing surface for the workpiece (37) and for the sliding shoe (26).

8. A guide device according to Claim 7, characterised in that the guide rail (16, 16′, 16″) is made from a flexible material, particularly a synthetic plastics material.

9. A guide device according to Claim 8, characterised in that the guide rail (16, 16′, 16″) is produced from anodised aluminium by an extrusion moulding process and is provided with flutes to receive the workpiece support (37) and with grooves for the insertion of nails or a nail board or a glued fixing.

10. A guide device according to Claim 1, characterised in that the moving part (80) is provided with at least one wheel (120) adapted to be set against an abutment face (130a, 130b) extending parallel with the guide rail (60), for non-pivoting guidance.

11. A guide device according to Claim 1 or 10, characterised in that the guide rail (60) is fixed on a workpiece support beam (300) which, on a supporting member (100), on its side remote from the guide rail (60), is pivotable about an axis (400) extending parallel with the surface of the supporting member (100) and at half the height of this workpiece support beam (300) and in that abutment surfaces (130a, 130b) are provided on the workpiece support beam (300) respectively above and below the guide rail (60).

12. A guide device according to Claim 11, characterised in that fixed on the supporting member (100) is an angle (200), the latter having at its end which is remote from the supporting member (100) and mounted at half the height of and on the workpiece support beam (300) an arm (50), that side of the workpiece support beam (300) which is towards the arm (50) having, extending over half its height, a bevelled face (250) the size of which is so chosen that only one surface of the arm (50) bears against the workpiece support beam (300).

13. A guide device according to Claim 1, characterised in that the guide rail (60) is fixed to a workpiece support beam (300) and in that grooves (230a to 230c) are provided for insertion of a strip-like workpiece on one side of the workpiece support beam.

14. A guide device according to Claim 11, characterised in that one of the sides (210, 220) of the workpiece support beam (300) which extend parallel with the supporting member (100) is smooth, while the other comprises the grooves (230a to 230c).

15. A guide device according to one of Claims 10 to 14, characterised in that the moving part (80) and the machining unit (140) are pivotable and lockable in respect of each other, being guided on each other via a sliding guide with respective arcuately shaped pivoting segments (160, 180).

**Revendications**

1. Dispositif de guidage pour des rabots à main ou des fraises avec un arbre d'outil ou une tête de rabot commandé par moteur et sectionnant le pourtour, en particulier pour le façonnage de pièces allongées telles que des listeaux ou similaires, qui est pourvu d'une monture (5, 6), raccordable de manière fixe à l'outil de façonnage (1) et d'une traverse de guidage fixée sur celle-ci au moyen de tiges, qui est guidé sur une glissière de guidage (16) adjointe à la pièce, avec lequel la distance de l'outil de façonnage à la traverse de guidage est réglable, caractérisé en ce que la traverse de guidage est constituée par une plaque de maintien (10) pourvue de tiges, laquelle est pourvue d'un guidage (10') pour une pièce de raccord (13) à une partie mobile (14), en ce qu'il est constitué contre la partie mobile deux éléments profilés voisins essentiellement cylindriques, qui sont guidés par encastrement de forme dans la glissière de guidage (16), laquelle est constituée par un profilé de guidage avant ouvert d'un côté, dont la rainure de guidage (16a) est adaptée à la section des éléments profilés et en ce que l'ouverture du profilé de guidage de la glissière de guidage (16) est constituée par une fente longitudinale (16b) dont la largeur correspond à l'angle de pivotement de l'outil de façonnage.

2. Dispositif de guidage selon la revendication 1, caractérisé en ce que les tiges (6) sont introduites et bloquées dans des perçages (5) de l'outil de façonnage et en ce qu'il est affecté au moins une tige (6), un ressort de rappel (13) et à la plaque de maintien (10) une vis de réglage (9), qui est en prise avec un filetage de réglage (8) de l'outil de façonnage (1).

3. Dispositif de guidage selon la revendication 1 ou 2, caractérisé en ce que la pièce de raccord (13) est constituée par une pièce pliée en forme de Z, dont les bords latéraux constituent des bords de guidage et dont une branche libre (13a) est pourvue d'un filetage de réglage (22) d'une vis de réglage (21) disposée sur la plaque de maintien (10) et agissant, de préférence, en opposition avec un ressort de rappel (23) et dont l'autre branche libre (13b) est pourvue de l'élément de guidage (15).

4. Dispositif de guidage selon la revendication 3, caractérisé en ce qu'il est prévu deux cylindres de guidage (15) respectivement disposés dans la région des extrémités d'une des branches libres (13b) de la pièce de raccord (13), qui sont arrondis à leurs extrémités frontales en formes de tonneau.

5. Dispositif de guidage selon la revendication 1, caractérisé en ce qu'il est adjoint à l'outil de façonnage (1) sur le côté en regard de la plaque de maintien (10) un patin (26) mobile par rapport à l'arbre de rabot (29) ou à la tête de rabot, pour appui sur une surface de travail ou de guidage (18).

6. Dispositif de guidage selon la revendication 5, caractérisé en ce que le patin (26) monté pivotant et blocable sur le rabot à main (1) dans un plan s'étendant perpendiculairement à l'axe (29) de l'arbre d'outil ou de la tête de rabot et en ce que la surface d'appui (27) du patin (26) est prévue dans la région de contact de l'arbre d'outil (29) ou de la tête de rabot.

7. Dispositif de guidage selon la revendication 1, caractérisé en ce que la glissière de guidage (16, 16'') est constituée en forme de gande d'appui pour la pièce (36, 37) et/ou est pourvue d'une surface d'appui pour la pièce (37) et pour le patin (26).

8. Dispositif de guidage selon la revendication 7, caractérisé en ce que la glissière de guidage (16, 16', 16'') est réalisée dans un matériau flexible, notamment en matière plastique.

9. Dispositif de guidage selon la revendication 8, caractérisé en ce que la glissière de guidage (16, 16', 16'') est réalisée en aluminium anodisé selon un procédé de filage à chaud et est pourvue de rainures de serrage pour l'appui de la pièce (37) et de rainures pour la mise en place de clous ou d'une planche d'enclouage ou d'une fixation par collage.

10. Dispositif de guidage selon la revendication 1, caractérisé en ce que la partie mobile (80) est pourvue d'au moins une roue (120), qui peut être appliquée contre une surface de butée (130a, 130b) s'étendant parallèlement à la glissière de guidage (60) pour un guidage sans basculement.

11. Dispositif de guidage selon la revendication 1 ou 14, caractérisé en ce que la glissière de guidage (60) est fixée sur une poutre d'appui de pièce (300), qui peut pivoter sur une base (100) sur sa face opposée à la glissière de guidage (60) autour d'un axe s'étendant parallèlement à la surface de la base (100) et à mi-hauteur de cette poutre d'appui de pièce (300) et en ce que des surfaces de butée (130a, 130b) sont respectivement prévues au-dessus et au-dessous de la glissière de guidage (60).

12. Dispositif de guidage selon la revendication 15, caractérisé en ce qu'il est fixé sur la base (100) une équerre (200) sur l'extrémité opposée à la base (100) sur laquelle est montée une branche pivotante (50), fixée sur la poutre d'appui de pièce à mi-hauteur de celle-ci et en ce que la poutre d'appui de pièce (300) présente sur sa face en regard de la branche (50) un biseau (250) s'étendant sur la moitié de sa hauteur qui est choisi suffisamment grand pour que la branche (50) ne s'appuie que par une surface sur la poutre d'appui de pièce (300).

13. Dispositif de guidage selon la revendication 1, caractérisé en ce que la glissière de guidage (60) est fixée sur une poutre d'appui de pièce (300) et en ce que sont prévues des rainures (230a, 230c) pour l'encastrement d'une pièce en forme de listeau sur un côté de la poutre d'appui de pièce.

14. Dispositif de guidage selon la revendication 15, caractérisé en ce qu'une des faces (200, 300) de la poutre d'appui de pièce s'étendant parallèlement à la base (100) est unie, tandis que l'autre face présente des rainures (230a–230c).

15. Dispositif de guidage selon l'une des revendications 14 à 18, caractérisé en ce que la partie mobile (80) et l'outil de façonnage (140) sont guidés ensemble, peuvent pivoter et être maintenus l'un contre l'autre, à l'aide de segments (160–180) respectifs en forme d'arc de cercle et au moyen d'un guide de coulisse.

## Fig. 1

## Fig. 2

Fig. 3

Fig. 5

Fig. 6

Fig. 7

Fig. 4

Fig. 8

Fig. 9

Fig. 10

EP 0 126 283 B1